# EUROPEAN PATENT SPECIFICATION

(11) **EP 1 235 957 B1**
(45) Date of publication and mention of the grant of the patent: **02.06.2004**
(21) Application number: 00972809.8
(22) Date of filing: 19.10.2000
(51) Int. Cl.: D06F 37/26, D06F 37/20, B28B 19/00

(54) **METHOD FOR THE PRODUCTION OF PARTS OF A CONSIDERABLE SPECIFIC GRAVITY BUILT ON FERROUS INERT MATERIALS, AND PARTS MANUFACTURED WITH SUCH A METHOD**
VERFAHREN ZUM HERSTELLEN VON TEILEN MIT EINER HOHEN SPEZIFISCHEN DICHTE , HERGESTELLT AUS INERTEN EISENMATERIALEN, UND SO HERGESTELLTE TEILE
PRODUCTION DE PIECES DE POIDS SPECIFIQUE ELEVE A BASE DE MATERIAUX FERREUX INERTES, ET PIECES OBTENUES SELON UN TEL PROCEDE

(30) Priority: 10.12.1999 IT PN990094
(43) Date of publication of application: 04.09.2002
(73) Proprietor: ELECTROLUX HOME PRODUCTS ITALY S.p.A., 33080 Porcia (Pordenone) (IT); RO-SA PLAST S.p.A., I-33080 Porcia, Pordenone (IT); Sika Italia S.p.A., 20132 Milano (IT)
(72) Inventor: GRISONI, Luca, I-22070 Capiago (IT); QUATTRIN, Roberto, I-33080 Zoppola (IT); SANDRIN, Giannino, I-33080 Porcia (IT)
(74) Representative: Giugni, Valter
(86) International application number: PCT/EP2000/010295
(87) International publication number: WO 2001/042552

(56) References cited:
- EP-A- 0 623 436
- EP-A- 0 812 946
- EP-A- 0 969 134
- DE-A- 3 834 112
- DE-A- 19 755 173

## Description

The present invention relates to a method for the production of parts manufactured to a high specific gravity based on the use of ferrous inert materials.

Manufactured parts of this kind typically include counterweights such as the ones used in home appliances, in particular the counterweights mounted on the outer surface of the suspended tub that is a part of the washing assembly installed within the outer casing of a clothes washing or similar machine. Ideally, manufactured parts of such a kind should:
- have the highest possible specific gravity, with particularly tight weight and dimensional tolerances, so as to be able to take up a space which not only is the smallest possible one, but is also well-defined within the outer casing of the washing machine:

- be considerably strong and robust to withstand both localized stresses imparted by the attachment means on to the outer surface of the washing tub and the dynamic stresses induced by the oscillations of the suspended washing assembly during operation;
- be capable of being manufactured in a manner that is consistent with the requirements imposed by the so-called "Just-in-Time" delivery system and, of course, at reduced costs and investments;
- last, but not least, be easily separated from the other parts of the machine when the latter is discarded and scrapped, in view of a subsequent recycling in compliance with environment safeguard principles.

For the production of such manufactured parts the practice is known since a rather long time to make use of cement-based conglomerates, in which the inert fillers are at least partly composed of ferrous oxides or similar materials in order to increase the specific gravity thereof. For instance, the method disclosed in US-A-3 185 255 includes following sequence of phases:
- moulding of a shell of plastic material having the outer shape and size of the final counterweight.
- casting, through the upper open portion of this shell, of a fluid conglomerate formed of concrete added with hematite (Fe₂O₃),
- hardening of the conglomerate,
- closing of the upper open portion of the shell with a lid.

Apart from the fact that the so achievable specific gravity (200 lbs/cu.ft, equal to approx. 3.2 kg/dm³) is not compatible with the necessary mass and the reduced dimensions available in modern clothes washing machines of the residential type, the above cited method, owing to the fact that it does not call for any use of accelerators for the conglomerate hardening phase, certainly requires rather long processing times that are clearly not meeting the requirements of the above cited "Just-in-Time" delivery system.

More recently, the European patent application EP-A-0 623 436 disclosed in this connection both the use of a plastic shell, reinforced by appropriate metal inserts, and a particularly fluid cement conglomerate comprising, further to metal chips as heavy inert fillers, undefined accelerating and/or binding additives. This method calls for the shell to be kept under continuous vibratory conditions in order to cause the conglomerate to become duly compacted before it starts to first solidify and then harden. While the presence of the reinforcing inserts can on the one side be understood as indicating the fact the conglomerate itself has just moderate inherent mechanical properties and, on the other side, causes the manufacturing costs of the counterweight to clearly increase, the need for the shell to be kept vibrating during the process introduces a clearly appreciable complication in this method.

Still more recently, the European patent application EP-A-0 812 946 disclosed a method calling for the ferrous inert materials (rolling scales and the like) to be mixed with water. Owing to the shell requiring again to be kept in a continuous vibratory state in order to enable the conglomerate to become compacted, this method practically does not do away with the above cited drawbacks.

It therefore is a main purpose of the present invention to provide a method for producing manufactured parts with a high specific gravity industrially, which is again based on the used of waste materials from steel-making mills and the like (eg., ferrous oxides), is not connected to the afore mentioned drawbacks and is moreover able to meet all of the afore mentioned requirements.

A method with the features recited in the appended claims actually enables this and further aims to be reached.

Anyway, characteristics and advantages of the present invention will become more readily apparent from the description that is given below by way of nonlimiting example of a possible, although not sole implementation with reference to the production of a counterweight (being typically in a substantially toroidal or crescent-like shape) which is adapted to be mounted on the outer surface of the oscillating tub that is part of the suspended washing assembly of a home-type clothes washing machine.

The plastic outer shell of the counterweight is manufactured in a traditional manner by means of a method such as injection moulding or blow moulding. Thanks to the characteristics of the conglomerate, which will be described in greater detail further on, the shape and the dimensions of the shell (and, therefore, its inner volume) are exactly the final shape and dimensions of the counterweight, as they are set by the design engineer of the same clothes washing machine in accordance with the other parts thereof that are intended to fit therewith, in particular the outer casing of the machine and the washing tub.

The next phase of the manufacturing process of the counterweight consists in filling into the shell a conglomerate which, according to the present invention, is substantially formed from a cement binder, waste ferrous material (micro-spheres or rolling scales) from a steel mill or similar steel-making plant as inert fillers, and water. The ferrous material is sifted and/or ground to a largest allowable grain size in the order of 6 millimetres. A particularly appropriate cement binder consists in turn of an enriched Portland cement powder having at a temperature of 20°C:
- a specific gravity of 1.035 kg/dm³
- a pH value of approx. 12
- a good miscibility with water

According to the present invention, the preparation of the conglomerate takes for instance place, while in any case continuously stirring the materials being processed, in the drum of a concrete mixer according to the following sequence of phases:
A. Mixing of the inert fillers and the cement binder, in the appropriate mass-percentages of approx. 80 to 85 mass-percent and approx. 15 to 20 mass-percent, respectively, for some seconds and under dry conditions.
B. Gradual addition, to the above indicated mix, of water in which there has been dissolved a liquid de-aerating agent, in order to obtain a conglomerate. Such a water addition amounts to approx. 35 to 40 mass-percent (taking the actual degree of humidity of the inert fillers into due account) of the above mentioned binder, The de-aerating substance is preferably formed from a mixture of phosphoric acid esters having at 20°C:
   - a specific gravity from 1.005 to 1.01 kg/dm³
   - a pH value from 7.5 to 10.5
   - a viscosity from 7 to 14 mPas
   as well as following safety-relevant properties:
   - boiling point: 130°C
   - decomposition point: approx. 290°C
   - melting point: < -70°C
   - flash point: > 150°C
   - self-ignition temperature: 400°C
   - vapour pressure at 20°C: 0.008 mbar
   - idem at 50°C: 0.08 mbar
   so that it is sufficient for a rather small amount of it to be used, generally in the order of approx. 0.04 mass-percent of the above cited cement binder. This phase has typically a duration of approx. 2 to 3 minutes.
C. Addition to the conglomerate of a substance having the function of stabilizing the conglomerate and conferring it the necessary viscosity for the next phase of the counterweight manufacturing method according to the present invention, this substance being a combination of organic poly-hydroxides in an aqueous solution. To this purpose, a particularly suitable substance is a combination of organic poly-hydroxides having at 20°C:
   - a specific gravity from 1.005 to 1.01 kg/dm³
   - a pH value from 7.5 to 10.5
   - a viscosity from 7 to 14 mPas
further to a good solubility in water. The stabilizing and viscosity-boosting substance can be metered into the conglomerate in a quantity varying from 0.3 to 0.5 mass-percent of the cement binder. This phase has a duration in the order of 15 to 25 percent of the duration of the preceding phase B, ie. it has a duration of just a few tens of seconds.

A conglomerate according to the present invention has a specific gravity of at least 3.6 kg/dm³ and advantageously has such a homogeneity and such a consistency as to be able to be metered volumetrically, ie. in a manner conforming to the inner volume of the shell, rather than by weighting as in the case of the conglomerates prepared according to prior-art methods. This is the reason why, as already hinted to earlier in this description, with a shell that has been moulded to exactly the same final shape and size of the counterweight, the latter has always the weight as set by the design engineer.

As this has been found and demonstrated experimentally, the conglomerate filling phase that has been just described above does not therefore require that the shell be kept vibrating throughout the filling time. At most, just a few final jolts may be required, which anyway can also be imparted by hand. A further advantage of the present invention, therefore, lies in the fact that the fabrication of the manufactured parts turns out to be facilitated and the necessary tools to be simplified to a quite significant extent.

Filling the cement conglomerate into the shell is furthermore done through a small aperture in the outer surface thereof, which can be plugged immediately thereafter since, thanks to the synergetic effect of the de-aerating substance and the stabilizing and viscosity-promoting substance, the conglomerate is capable of gaining good mechanical properties very quickly. Laboratory tests have ascertained a flexural strength of the conglomerate in excess of 40 kg/cm², and a compressive strength in excess of 200 kg/cm², after just 24 hours from filling into the shell. In an advantageous manner, anyway, the hardening of the conglomerate takes place in a closed, ie. sealed shell, so that the counterweight is capable of being immediately handled, although not used. In all cases, it clearly appears that the production of the counterweight according to the present invention is fully compatible with the "Just-in-Time" system, which is largely known to only admit a very short time between an order and the corresponding delivery of a manufactured part.

The final mechanical characteristics of the conglomerate are definitely rewarding, since flexural strengths in excess of 80 kg/cm² and compressive strengths in excess of 450 kg/cm² have been measured in the laboratory after 28 days. ie. values that are at least the double of those measured after just 24 hours. As a result, no need seems to arise for metal inserts to be used to reinforce the counterweight, as opposed to prior-art solutions.

## Claims

1. Method for the production of a manufactured part having a high specific gravity, comprising the phases of:
- moulding a shell of plastic material, eg. by injection or blow moulding, *to the same shape and the same dimensions as the finished manufatured part;*
- preparing a conglomerate having a specific gravity of at least 3.6 kg/dm³ and containing waste ferrous materials from steel mills or steel works acting as inert fillers, such as for instance oxides, further to at least a cement-based binder and water;
- filling the conglomerate into the shell *in a volumetrically metered quantity that is equal to the infernal volume of the shell,* while at the most requiring just a few final settling jolts to be imparted to said shell, *and*
- hardening the conglomerate,
**characterized in that**
the preparation of the conglomerate, which is carried out while continuously stirring the materials being processed, eg. in the drum of a concrete mixer, consists in turn of following phases:
A. mixing the inert fillers, which have been previously sifted and/or ground so as to obtain a grain size thereof not exceeding 6 mm, under dry conditions with a cement binder in the corresponding percentages of approx. 80 to 85 mass-percent and approx. 15 to 20 mass-percent, respectively;
B. gradual addition of water in a quantity amounting to approx. 35 to 40 mass-percent of said cement binder, at least a de-aerating substance being dissolved in said water in a proportion of approx. 0.04 mass-percent of the same cement binder;
C. addition to the so obtained conglomerate of at least a stabilizing and viscosity-promoting substance in a proportion of approx. 0.3 to 0.5 mass-percent of the same cement binder;

2. Method according to claim 1, **characterized in that** said phase C of addition of the stabilizing and viscosity-promoting substance has a duration in the order of 15 to 25 percent of the duration of said phase B of addition of water with de-aerating substance.

3. Method according to claim 1, **characterized in that** as a de-aerating substance use is made of a mixture of phosphoric acid esters having at 20°C: a specific gravity from 1.005 to 1.01 kg/dm³; a pH value from 7.5 to 10.5; a viscosity from 7 to 14 mPas.

4. Method according to any of the preceding claims, **characterized in that** as a stabilizing and viscosity-promoting substance use is made of a combination of organic poly-hydroxides having at 20°C: a specific gravity from 1.005 to 1.01 kg/dm³; a pH value from 7.5 to 10.5; a viscosity from 7 to 14 mPas, further to a good water solubility.

## Patentansprüche

1. Verfahren zur Herstellung von einem Erzeugnis hoher Wichte, das folgende Verfahrensabschnitte zum
- Formen, z.B. durch Spritzgießen oder Blasformen, einer die gleiche Form und die gleichen Außenmasse des Fertigerzeugnisses aufweisenden Hülle aus Kunststoff,
- Bereitstellen eines Konglomerats mit einem spezifischen Gewicht von mindestens 3,6 kg/dm³, das aus Stahl- und Eisenhütten und -werken stammende und als chemisch träge Füllstoffe dienende Eisenabfälle, wie z.B. Eisenoxyde, zusätzlich zu mindestens einem Zementbindemittel und Wasser enthält,
- Einfüllen einer volumetrisch zugemessenen, dem Innenvolumen der oben genannten Hülle entsprechenden Menge des so bereitgestellten Konglomerats in die Hülle, wobei die Hülle höchstens nur einige Endstöße zum Dichtansetzen des darin enthaltenen Konglomerats unterworfen werden braucht, und
- Härten des Konglomerats
umfasst, **dadurch gekennzeichnet, dass** das unter ständigem Rühren des dazu benötigten und verwendeten Materials, wie z.B. in der Drehtrommel eines Betonmischers, durchgeführte Bereitstellen des Konglomerats wiederum folgende Verfahrensschnitte zur
A. Trockenmischung der vorher zur Erzielung einer Korngröße von höchstens 6 mm ausgesiebten und/oder gemahlenen chemisch trägen Füllstoffe mit einem Zementbindemittel in einem jeweiligen Mengenverhältnis von ca. 80 bis 85 Massenprozent zu 15 bis 20 Massenprozent,
B. allmählichen Zugabe von Wasser in einer Menge von ca. 35 bis 40 Massenprozent des genannten Zementbindemittels, wobei mindestens ein Entlüftungsmittel in einem Mengenverhältnis von ca. 0,04 Massenprozent desselben Zementbindemittels im genannten Zugabewasser aufgelöst ist,
C. Zugabe von mindestens einem Stabilisier- und Viskositätsfördermittel in einem Mengenverhältnis von ca. 0,3 bis 0,5 Massenprozent desselben Zementbindemittels in das so zubereitete Konglomerat,
umfasst.

2. Verfahren nach Anspruch 1, **dadurch gekennzeichnet, dass** der genannte Verfahrensschnitt C, bei welchem das Stabilisier- und Viskositätsfördermittel hinzugegeben wird, eine Dauer in der Größenordnung von 15 bis 25 Prozent der Dauer des genannten Verfahrensschnitts B, bei welchem Wasser mit darin aufgelöstem Entlüftungsmittel zugegeben wird, aufweist.

3. Verfahren nach Anspruch 1, **dadurch gekennzeichnet, dass** eine Mischung aus Phosphorsäureestern mit einem spezifischen Gewicht von 1,005 bis 1,01 kg/dm³, einem pH-Wert von 7,5 bis 10,5 und einer Viskosität von 7 bis 14 mPas bei einer Temperatur von 20°C als Entlüftungsmittel verwendet wird.

4. Verfahren nach einem der vorhergehenden Ansprüche, **dadurch gekennzeichnet, dass** eine Verbindung von organischen Poly-Hydroxyden mit einer guten Wasserlöslichkeit, einem spezifischen Gewicht von 1,005 bis 1,01 kg/dm³, einem pH-Wert von 7,5 bis 10,5 und einer Viskosität von 7 bis 14 mPas bei einer Temperatur von 20°C als Stabilisier- und Viskositätsfördermittel verwendet wird.

## Revendications

1. Procédé pour la fabrication d'un composant manufacturé ayant un poids spécifique important, comprenant les phases de :
- mouler une coque en plastique, par exemple par moulage à injection ou soufflage, ayant la même forme et les mêmes dimensions du composant manufacturé fini,
- préparer un aggloméré ayant un poids spécifique d'au moins 3,6 kg/dm³ et contenant, en tant que charge inerte, des matériaux ferreux provenant de déchets de fonderie ou aciérie, tels qu'oxydes de fer, en outre d'au moins un liant de ciment et eau;
- verser l'aggloméré dans la coque dans une quantité dosée volumétriquement correspondant au volume intérieur de la coque, seulement très peu de secousses finales étant nécessaires afin d'assurer le tassement de l'aggloméré dans la coque, et
- faire durcir l'aggloméré,
**caractérisé en ce que** la préparation de l'aggloméré, qui se déroule en conditions de remuement continu du matériau étant traité, comme par exemple dans le tambour d'une bétonnière, comprend à son tour les phases suivantes de :
A. mélanger à sec les matériaux inertes, qui auront été tamisés et/ou broyés auparavant afin d'obtenir une grosseur de grain de 6 mm tout au plus, avec un liant de ciment dans des quantités se situant respectivement entre 80 et 85 pour-cent en masse environ et 15 et 20 pour-cent en masse environ,
B. ajouter graduellement de l'eau dans une quantité se situant entre 35 et 40 pour-cent en masse environ dudit liant de ciment, au moins une substance désaérante étant fait dissoudre dans ladite eau dans une proportion de 0,04 pour-cent en masse environ du même liant de ciment,
C. ajouter au moins un agent de stabilisation et promoteur de viscosité dans l'aggloméré ainsi obtenu dans une proportion se situant entre 0,3 et 0,5 pour-cent en masse environ du même liant de ciment.

2. Procédé selon la revendication 1, **caractérisé en ce que** ladite phase C, dans laquelle un agent de stabilisation et promoteur de viscosité est ajouté dans l'aggloméré, a une durée d'un ordre de grandeur se situant entre 15 et 25 pour-cent de la durée de ladite phase B, dans laquelle on ajoute l'eau contenant l'agent de désaération.

3. Procédé selon la revendication 1, **caractérisé en ce qu'**un mélange d'esters de l'acide phosphorique ayant un poids spécifique de 1,005 à 1,01 kg/dm³, une valeur pH de 7,5 à 10,5 et une viscosité de 7 à 14 mPas à une température de 20°C est utilisé en tant qu'agent de désaération.

4. Procédé selon la revendication 1, **caractérisé en ce qu'**une combinaison de poly-hydroxydes organiques ayant un poids spécifique de 1,005 à 1,01 kg/dm³, une valeur pH de 7,5 à 10,5 et une viscosité de 7 à 14 mPas, en plus d'une bonne solubilité sans l'eau, à une température de 20°C est utilisée en tant qu'agent de stabilisation et promoteur de viscosité.
